# EUROPEAN PATENT APPLICATION

(11) **EP 0 714 825 A1**
(43) Date of publication of application: **05.06.1996**
(21) Application number: 94308771.8
(22) Date of filing: 28.11.1994
(51) Int. Cl.: B62M 1/12

(54) **Stabilization device for front wheel drive bicycles**

(71) Applicant: Ehrbar, James J., Mesa, Arizona 85205 (US)
(72) Inventor: Ehrbar, James J., Mesa, Arizona 85205 (US)
(74) Representative: Orchard, Oliver John

(57) **Abstract**

A dual drive bicycle (10) having a hand crank mechanism for applying driving power to the front wheel of the bicycle includes a stabilizer bar (24) attached to a hand crank mechanism frame, the stabilizer bar including a chest saddle (26) against which the rider positions the chest area of his upper body during operation of the front wheel hand crank mechanism. The force applied by the rider's upper body against the chest saddle acts to maintain forward alignment of the front wheel of the bicycle to thereby greatly improve the stability of the bicycle. In addition, the stabilizer bar and chest saddle combination provides a resistance against which the rider works while operating the front wheel hand crank mechanism.

## Description

### Background and Summary of the Invention

This invention relates generally to bicycles and more specifically to bicycles that include dual drive mechanisms that enable the rider to selectively apply driving power to the rear wheel by way of conventional foot pedals and to the front wheel by way of hand pedals.

The prior art is replete with dual drive bicycles. Exemplary of such bicycles are those described in US Patent Nos. 3,193,305, 4,147,370, 4,685,692, and 4,773,662. These prior art patents variously describe bicycles that, in addition to the conventional foot pedal rear wheel drive mechanism, include either hand crank or reciprocating lever mechanisms for driving the front wheel of those bicycles. All of the known dual drive bicycles suffer a major disadvantage in that the cranking or pedalling action of the rider's arms causes a twisting motion to be transferred to the front wheel of the bicycle. This twisting motion introduces a considerable degree of instability that makes controlling the bicycle quite difficult. This deficiency probably explains why these prior art dual drive bicycles have never gained acceptance by bicycling enthusiasts.

It is therefore the principal object of the present invention to provide a dual drive bicycle in which use of the front wheel drive mechanism does not introduce a force that acts to create instability of the bicycle.

The present invention provides a front wheel drive bicycle comprising a main frame; a rear wheel rotatably coupled to the main frame; a front wheel frame journaled to the main frame for steering the bicycle; a front wheel rotatably coupled to the front wheel frame; a hand crank drive mechanism coupled to the front wheel frame and to the front wheel for enabling the rider to apply driving power to the front wheel; and a stabilizer bar connected to the front wheel frame and extending rearward from the hand crank drive mechanism, the stabilizer bar having a chest saddle adjustably mounted at a distal end thereof for receiving the force of the rider's upper body to thereby maintain forward alignment of the front wheel while the hand crank drive mechanism is being operated by the rider.

A bicycle as set forth in the last preceding paragraph may further comprise adjustment means for adjusting the length of the stabilizer bar to thereby move the chest saddle forward or backward.

A bicycle as set forth in either one of the last two immediately preceding paragraphs may further comprise handlebar means adjustably positioned intermediate the length of the stabilizer bar for gripping by a rider when the hand crank drive mechanism is not being operated.

A bicycle as set forth in any one of the last three immediately preceding paragraphs may further comprise brake means coupled to the front wheel and brake control means, coupled to the handlebar means, for actuation by the rider.

A bicycle as set forth in any one of the last four immediately preceding paragraphs may further comprise adjustment means for adjusting the angle at which the stabilizer bar extends rearward from the hand crank drive mechanism.

A bicycle as set forth in any one of the last five immediately preceding paragraphs may further comprise pedal drive means for driving the rear wheel.

The present invention further provides apparatus for converting a rear wheel drive bicycle to a bicycle having front wheel and rear wheel drive whereby motive power can be applied to the front wheel when desired in addition to or as a substitute for the rear wheel drive, the apparatus comprising a hand crank drive mechanism couplable to the front wheel frame and to the front wheel for enabling the rider to apply driving power to the front wheel; and a stabiliser bar which can be connected to the front wheel frame and extending rearward from the hand crank drive mechanism, the stabiliser bar having a chest saddle adjustably mounted at a distal end thereof for receiving the force of the rider's upper body thereby to maintain forward alignment of the front wheel while the hand crank drive mechanism is being operated by the rider.

The illustrated preferred embodiment of the present invention provides a stabilizer bar attached to a hand crank mechanism frame, the stabilizer bar including a chest saddle against which the rider positions the chest area of his upper body during operation of the front wheel hand crank mechanism. The force applied by the rider's upper body against the chest saddle acts to maintain forward alignment of the front wheel of the bicycle to thereby greatly improve the stability of the bicycle. In addition, the stabilizer bar and chest saddle combination provides a resistance against which the rider works while operating the front wheel hand crank mechanism.

There now follows a detailed description which is to be read with reference to the accompanying drawings of a bicycle and apparatus according to the present invention; it is to be clearly understood that this bicycle and apparatus have been selected for description to illustrate the invention by way of example and not by way of limitation.

### Brief Description of the Drawings

Figure 1 is a pictorial diagram of a dual drive bicycle according to the present invention.

Figure 2 is a detailed pictorial diagram of the front wheel hand crank mechanism, including the stabilizer bar and chest saddle, of the dual drive bicycle illustrated in Figure 1.

### Detailed Description of the Preferred Embodiment

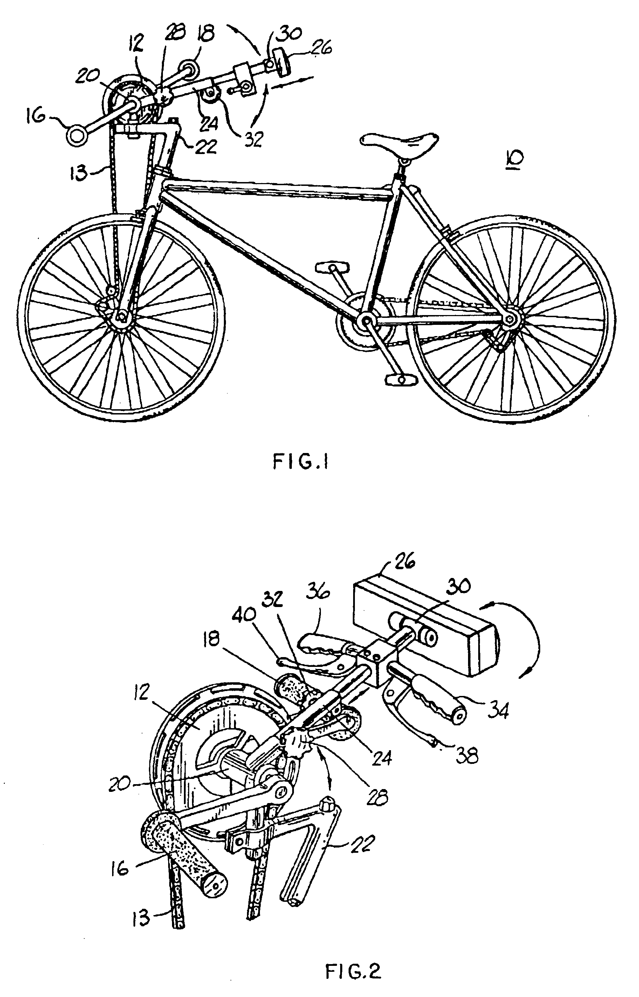

Referring now to Figures 1 and 2, there is shown a dual drive bicycle **10** that includes a conventional foot pedal rear wheel drive mechanism. A similar drive mechanism is provided to enable the rider to also apply driving power to the front wheel of the bicycle through use of his or her arms and hands. The front wheel drive mechanism includes a conventional chain drive sprocket **12** driven by a hand crank mechanism that includes left and right crank handles **16** and **18** respectively. Left and right crank handles **16**, **18** are preferably closely spaced laterally, while maintaining clearance from the bicycle frame, to thereby minimize the twisting force produced during operation of the hand crank mechanism. Chain drive sprocket **12** conventionally couples a drive chain **13** to the front wheel of bicycle **10**, either directly or through a conventional gear selection derailleur mechanism. The hand crank mechanism includes a conventional bearing frame **20** that is attached to the front wheel steering column **22** of bicycle **10**. It is important to position the hand crank mechanism such that the centerline of rotation of crank handles **16**, **18** is in close proximity to the centerline of the front wheel steering column **22** to thereby minimize the transfer of any twisting force resulting from operation of the hand crank mechanism to the front wheel steering column **22**.

A stabilizer bar **24** is attached to the hand crank mechanism and extends rearward therefrom. A chest saddle **26**, appropriately formed and padded to receive the rider's chest area, is attached to the rearward end of stabilizer bar **24**. A conventional thumbwheel adjustment means **28** permits upward and downward pivotal adjustment of stabilizer bar **24**. Similar adjustment means **30** and **32** allow chest saddle **26** to be turned, as well as either retracted or extended to accommodate the preferred position of the rider. A pair of adjustable handlebars **34**, **36** are positioned intermediate the length of stabilizer bar **24** for use by the rider when the hand crank mechanism is not being used. Handlebars **34**, **36** may be adjusted to be closer to or further from the rider by sliding them along stabilizer bar **24**. Brake controls **38**, **40** are associated with handlebars **34**, **36** for conventionally controlling front and rear wheel calliper brakes. Alternatively, a conventional coaster brake may be employed.

The front and rear wheel drives for bicycle **10** may be any combination of conventional fixed or multiple speed gear selection drives. In operation, the rider of the dual drive bicycle **10** of the present invention leans forward so that the chest area of his upper body is forced against chest saddle **26** during the time that the rider is using his or her arms and hands to operate crank handles **16**, **18** to apply driving power to the front wheel of bicycle **10**. As stated above, the force of the rider's upper body against chest saddle **26** maintains forward alignment of the front wheel of bicycle **10** and minimizes the transfer of any twisting motion from the hand crank mechanism to the front wheel, thereby greatly improving the stability of bicycle **10**.

## Claims

1. A front wheel drive bicycle comprising:
a main frame;
a rear wheel rotatably coupled to the main frame;
a front wheel frame journaled to the main frame for steering the bicycle;
a front wheel rotatably coupled to the front wheel frame;
a hand crank drive mechanism coupled to the front wheel frame and to the front wheel for enabling the rider to apply driving power to the front wheel;
a stabilizer bar connected to the front wheel frame and extending rearward from the hand crank drive mechanism, the stabilizer bar having a chest saddle adjustably mounted at a distal end thereof for receiving the force of the rider's upper body to thereby maintain forward alignment of the front wheel while the hand crank drive mechanism is being operated by the rider.

2. A front wheel drive bicycle according to claim 1 further comprising adjustment means for adjusting the length of the stabilizer bar to thereby move the chest saddle forward or backward.

3. A front wheel drive bicycle according to either one of claims 1 and 2 further comprising handlebar means adjustably positioned intermediate the length of the stabilizer bar for gripping by a rider when the hand crank drive mechanism is not being operated.

4. A front wheel drive bicycle according to any one of the preceding claims further comprising brake means coupled to the front wheel and brake control means, coupled to the handlebar means, for actuation by the rider.

5. A front wheel drive bicycle according to any one of the preceding claims further comprising adjustment means for adjusting the angle at which the stabilizer bar extends rearward from the hand crank drive mechanism.

6. A front wheel drive bicycle according to any one of the preceding claims further comprising pedal drive means for driving the rear wheel.

7. Apparatus for converting a rear wheel drive bicycle to a bicycle having front wheel and rear wheel drive whereby motive power can be applied to the front wheel when desired in addition to or as a substitute for the rear wheel drive, the apparatus comprising:
a hand crank drive mechanism couplable to the front wheel frame and to the front wheel for enabling the rider to apply driving power to the front wheel; and
a stabiliser bar which can be connected to the front wheel frame and extending rearward from the hand crank drive mechanism, the stabiliser bar having a chest saddle adjustably mounted at a distal end thereof for receiving the force of the rider's upper body thereby to maintain forward alignment of the front wheel while the hand crank drive mechanism is being operated by the rider.

8. Apparatus according to claim 7 further comprising adjustment means for adjusting the length of the stabilizer bar to thereby move the chest saddle forward or backward.

9. Apparatus according to either one of claims 7 and 8 further comprising handlebar means adjustably positioned intermediate the length of the stabilizer bar for gripping by a rider when the hand crank drive mechanism is not being operated.

10. Apparatus according to any one of claims 7 to 9 further comprising brake means couplable to the front wheel and brake control means, coupled to the handlebar means, for actuation by the rider.

11. Apparatus according to any one of claims 7 to 10 further comprising adjustment means for adjusting the angle at which the stabilizer bar extends rearward from the hand crank drive mechanism.
